(19) Europäisches Patentamt
European Patent Office
Office européen des brevets

(11) EP 1 030 871 B1

(12) EUROPÄISCHE PATENTSCHRIFT

(45) Veröffentlichungstag und Bekanntmachung des Hinweises auf die Patenterteilung:
**17.04.2002 Patentblatt 2002/16**

(51) Int Cl.[7]: **C08G 18/80**, C08G 18/73, C08G 18/75, C08G 18/79, C08G 18/78

(21) Anmeldenummer: **98961107.4**

(22) Anmeldetag: **28.10.1998**

(86) Internationale Anmeldenummer:
**PCT/EP98/06825**

(87) Internationale Veröffentlichungsnummer:
**WO 99/23133 (14.05.1999 Gazette 1999/19)**

# (54) VERFAHREN ZUR HERSTELLUNG EINER ZWEISCHICHTIGEN LACKIERUNG UND FÜR DIESES VERFAHREN GEEIGNETE LACKE

METHOD FOR PRODUCING A TWO-LAYERED COATING AND SUITABLE ENAMEL THEREFOR

PROCEDE POUR REALISER UN LAQUAGE BI-COUCHE ET VERNIS APPROPRIES A CET EFFET

(84) Benannte Vertragsstaaten:
**DE ES FR IT**

(30) Priorität: **04.11.1997 DE 19748584**

(43) Veröffentlichungstag der Anmeldung:
**30.08.2000 Patentblatt 2000/35**

(73) Patentinhaber: **BASF Coatings Aktiengesellschaft**
**48165 Münster (DE)**

(72) Erfinder:
- **POTH, Ulrich**
  **D-48163 Münster (DE)**
- **WIATR, Bärbel**
  **D-48165 Münster (DE)**

(74) Vertreter: **Fitzner, Ulrich, Dr. et al**
**Dres. Fitzner & Münch**
**Rechts- und Patentanwälte**
**Lintorfer Strasse 10**
**40878 Ratingen (DE)**

(56) Entgegenhaltungen:
**EP-A- 0 744 423**
**DE-B- 2 639 491**
**US-A- 4 727 100**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 030 871 B1

Printed by Jouve, 75001 PARIS (FR)

## Beschreibung

Gegenstand der vorliegenden Erfindung sind Lacke, enthaltend

A) ein hydroxylgruppenhaltiges Polymer oder eine Mischung aus hydroxylgruppenhaltigen Polymeren und

B) ein oder mehrere blockierte Di- und/oder Polyisocyanate, dessen Isocyanatgruppen zumindest teilweise mit Malonsäuredialkylester blockiert sind.

Die vorliegende Erfindung betrifft außerdem die Herstellung und Verwendung der Lacke sowie die Herstellung der in den erfindungsgemäßen Lacken eingesetzten blokkierten Polyisocyanate und deren Verwendung in Deck-und Klarlacken.

Es ist bekannt, blockierte Polyisocyanate als Vernetzer für Einbrennlacke einzusetzen. Einbrennlacke für die industrielle Anwendung, wie z.B. als Decklack, Basislack oder Füller für die Automobilserienlackierung, werden bevorzugt bei Temperaturen von 120 bis 140 °C eingebrannt. Es ist dabei das Ziel, Einkomponentenlacke zur Verfügung zu stellen, die bei möglichst niedrigen Einbrenntemperaturen gehärtet werden können und die dennoch bei Raumtemperatur ausreichend lagerstabil sind. Zu diesem Zweck werden üblicherweise Lacke auf Basis hydroxylgruppenhaltiger Bindemittel und blockierter Isocyanate als Vernetzer eingesetzt.

Es ist ferner bekannt, daß mit Diethylmalonat blockierte Isocyanate bereits bei sehr niedrigen Temperaturen von ca. 80 °C mit den OH-Gruppen von Acrylatcopolymerisaten reagieren. Mit Diethylmalonat verkappte Isocyanate sind jedoch sehr schwer löslich bzw. ihre Lösungen weisen eine nur unzureichende Lagerstabilität auf.

Aus der DE-A-42 04 518 sind zur Lösung dieses Problems nichtwäßrige Lacke gemäß Oberbegriff des Hauptanspruchs vorgeschlagen worden. Die dort beschriebene Verwendung anderer Blockierungsmittel zusammen mit Malonsäurediestern erniedrigt aber die Aushärtegeschwindigkeit und beeinträchtigt Farbzahl und Vergilbungsbeständigkeit der Beschichtungen. Außerdem führt die Oligomerisierung der Isocyanatkomponente zur Viskositätserhöhung der Vernetzerkomponente und somit zur Erniedrigung des erzielbaren Festkörpergehaltes der Lacke.

Ferner sind aus der DE-A-195 19 396 ganz oder teilweise mit Malonsäureestern blockierte (cyclo)aliphatische Polyisocyanate und ihre Verwendung in Beschichtungsmitteln bekannt, bei denen der Malonsäureester mindestens eine tert.- Butylgruppe enthält. Diese Polyisocyanate weisen im Vergleich zu Polyisocyanaten, die mit Diethylmalonat blockiert sind, eine um 10 bis 20 °C erniedrigte Deblockierungstemperatur auf. Die Verwendung von Malonsäureestern mit mindestens einer tert.-Butylgruppe als Blockierungsmittel weist jedoch den Nachteil auf, daß die Lagerstabilität des dort hergestellten Lackes schon bei Raumtemperatur nicht ausreichend ist.

Außerdem sind aus der DE-C-195 29 124 Beschichtungsmittel bekannt, bei denen es erfindungswesentlich ist, daß als Bindemittel eine Mischung aus einem styrolhaltigen und einem styrolfreien Acrylatcopolymerisat eingesetzt wird. Als Vernetzer enthalten diese Beschichtungsmittel ein oder mehrere freie oder blockierte Polyisocyanate. Neben einer Vielzahl anderer Blockierungsmittel werden in der DE-C-195 29 124 auch Malonsäuredialkylester genannt, wie z.B. u.a. Malonsäurediethyl-, -diisopropyl-und -di-tert.-butylester, wobei von diesen Malonsäuredialkylestern bevorzugt Diethylmalonat eingesetzt wird.

Weiterhin sind aus der US-A-4,677,180 Beschichtungsmittel bekannt, die neben einem hydroxyfunktionellen Bindemittel blockierte Isocyanate enthalten, bei denen die Isocyanatgruppen mit C1- bis C12-Alkylmalonaten blockiert sind. Als Beispiel für geeignete Malonate wird in dieser Schrift aber nur Diethylmalonat genannt. Nachteilig ist außerdem, daß diese aus der US-A-4,677,180 bekannten Beschichtungsmittel zwingend den Zusatz einer niedermolekularen Verbindung mit mindestens 2 OH-Gruppen pro Molekül als Stabilisierungsmittel erfordern.

In der JP-A-2-242867 wird ein basecoat/clearcoat-Verfahren beschrieben, bei dem nichtwäßrige transparente Decklacke aufgebracht werden, die (A) ein hydroxylgruppenhaltiges Kunstharz, (B). ein Aminoplastharz und (C) ein blockiertes Polyisocyanat enthalten, wobei die Komponenten (B) und (C) so auszuwählen sind, daß die Temperatur, bei der eine chemische Reaktion zwischen (A) und (C) einsetzt, höchstens 20°C unter und höchstens 50°C über der Temperatur, bei der eine chemische Reaktion zwischen (A) und (B) einsetzt, liegen soll.

Als Blockierungsmittel zur Herstellung der Komponente (C) werden vorzugsweise aliphatische Monoalkohole, Oxime und Caprolactame eingesetzt. Allerdings werden als geeignete Blockierungsmittel u.a. auch Malonsäureester genannt. Die in der JP-A-2-242 867 beschriebenen transparenten Decklacke liefern Lackierungen, die insbesondere hinsichtlich der Beständigkeit gegen organische Lösemittel und Säuren, Glanz, Transparenz und Resistenz gegenüber Vergilbung verbessert werden sollten.

Schließlich ist aus der DE-A-23 42 603 ein Verfahren zur Herstellung von Polyisocyanaten, die mit Malonsäuredialkylestern mit 1 bis 4 C-Atomen im Alkoholrest blockiert sind, und die Verwendung der blockierten Isocyanate in Lacken beschrieben. Nähere Angaben über die Zusammensetzung der Lacke und deren Verwendung sind jedoch in der DE-A-23 42 603 nicht enthalten.

Der vorliegenden Erfindung liegt daher die Aufgabe zugrunde, Lacke zur Verfügung zu stellen, bei denen

sowohl der fertige Einkomponentenlack als auch der eingesetzte Vernetzer eine ausreichende Lagerstabilität aufweisen und die gleichzeitig bei möglichst niedrigen Temperaturen aushärtbar sind. Dies bedeutet, daß bei 6-monatiger Lagerung des fertigen Einkomponentenlackes bei Raumtemperatur ein Viskositätsanstieg von weniger als 10 % auftritt bzw. daß bei Lagerung des Vernetzers über längere Zeiträume von bis zu 2 Jahren oder mehr kein signifikanter Viskositätsanstieg auftritt.

Ferner sollten die Lacke nur eine geringe Vergilbungsneigung beim Einbrennen sowie eine gute Säurefestigkeit, Kratzfestigkeit und einen hohen Glanz der resultierenden Beschichtungen gewährleisten. Schließlich sollten die Lacke zur Herstellung von Mehrschichtlakkierungen geeignet sein und insbesondere die üblicherweise im Bereich der Automobilserienlackierung gestellten Anforderungen erfüllen.

Diese Aufgabe wird überraschenderweise durch die Lacke der eingangs genannten Art gelöst, die dadurch gekennzeichnet sind, daß zur Verkappung der Isocyanatgruppen der Komponente (B) eine Mischung von Malonsäuredialkylestern aus

b1) 30 bis 85 Gew.-% eines oder mehrerer Malonsäuredialkylester der allgemeinen Formel (I)

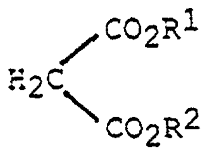

(I)

und/oder eines oder mehrerer Malonsäuredialkylester der allgemeinen der Formel (II)

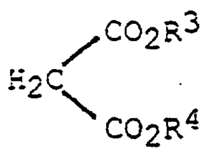

(II),

wobei

$R^1$, $R^2$ und $R^3$ jeweils gleiche oder verschiedene aliphatische und/oder cycloaliphatische und/oder araliphatische sekundäre Alkylreste mit mindestens 3 C-Atomen und
$R^4$ einen aliphatischen, cycloaliphatischen, oder araliphatischen Kohlenwasserstoffrest darstellen

und

b2) 70 bis 15 Gew.-% eines oder mehrerer, von der Komponente (b1) verschiedenen Malonsäuredialkylester, verwendet wird, wobei die Summe der Gewichtsanteile der Komponenten (b1) und (b2) jeweils 100 Gew.-% beträgt.

Die vorliegende Erfindung betrifft außerdem die HerStellung und Verwendung der Lacke sowie die Herstellung der in den erfindungsgemäßen Lacken eingesetzten blokkierten Polyisocyanate und deren Verwendung in Deckund Klarlacken.

Es ist überraschend und war nicht vorhersehbar, daß die teilweise Verwendung von Dialkylestern der Malonsäure mit sekundären Alkoholen anstelle von Dimethylmalonat bzw. Diethylmalonat als Blockierungsmittel für Polyisocyanate zu Lacken führt, die sich durch eine verbesserte Vergilbungsbeständigkeit der resultierenden Beschichtungen (insbesondere gegen Vergilbung, die infolge von hohen Einbrenntemperaturen und/oder infolge von langen Einbrennzeiten auftritt) auszeichnen. Vorteilhaft ist außerdem, daß durch die Verwendung von Malonsäurediestern mit sekundären Alkoholen die Löslichkeit und Verträglichkeit des blockierten Polyisocyanates verbessert wird.

Vorteilhaft ist ferner, daß die erfindungsgemäßen Lacke bei niedrigen Einbrenntemperaturen zu Beschichtungen mit einer guten Säurebeständigkeit und Kratzfestigkeit härtbar sind. Außerdem sind die erfindungsgemäß eingesetzten blockierten Polyisocyanate einfach und kostengünstig herstellbar. Schließlich sind die erfindungsgemäßen Lacke zur Herstellung von Mehrschichtlackierungen geeignet, erfüllen die üblicherweise im Bereich der Automobilserienlackierung gestellten Anforderungen und können auch mit einem niedrigen Gehalt (z.B. kleiner als 50 Gew.-%) an organischen Lösemitteln gut verarbeitet werden.

Im folgenden werden nun zunächst die erfindungsgemäßen Lacke näher erläutert.

Als Komponente (A) kann im Prinzip jedes für transparente Decklacke geeignete hydroxylgruppenhaltige Kunstharz oder eine Mischung aus solchen Kunstharzen eingesetzt werden. Bevorzugt werden die Harze so ausgewählt, daß die Komponente (A) eine OH-Zahl von 40 bis 240 mgKOH/g, besonders bevorzugt von 60 bis 150 mgKOH/g, aufweist. Als Komponente (A) werden vorzugsweise hydroxylgruppenhaltige Polyesterharze und/oder hydroxylgruppenhaltige Alkydharze und/oder hydroxylgruppenhaltige Polyacrylatharze sowie Mischungen aus diesen Harzen eingesetzt. Die als Komponente (A) eingesetzten Kunstharze weisen im allgemeinen zahlenmittlere Molekulargewichte von 1.500 bis 30.000, vorzugsweise 2.000 bis 15.000, besonders bevorzugt 2.500 bis 7.500 auf.

Hydroxylgruppenhaltige Polyesterharze, Alkydharze und Polyacrylatharze sind gut bekannt. Beispiele für solche Harze und deren Herstellung werden beispielsweise in der JP-A-2-24 28 67, DE-B-26 39 491, EP-A-403 044, US-A-3,639,147, DE-A-33 33 072, DE-A-38 14 853, GB-A-2 012 191, US-A-3,953,644, EP-A-260 447, DE-A-39 03 804, EP-A-320 552, DE-A-36 28 124, US-A-4,719,132, EP-A-297 576, EP-A-69 936, EP-A-89 497, EP-A-195 931, EP-A-228 003, EP-A-38 127 und DE-A-28 18 100 beschrieben.

Als Komponente (A) sind ferner die in der europäischen Patentanmeldung EP-A-767 185 sowie die in den US Patenten US-A-5,480,943, US-A-5,475 073 und US-A-5,534,598 genannten hydroxyfunktionellen Verbindungen geeignet.

Als Komponente (A) werden besonders bevorzugt Polyacrylatharze eingesetzt, die herstellbar sind, indem

(a) 10 bis 92, vorzugsweise 20 bis 60 Gew.-%, eines Alkyl- oder Cycloalkylacrylates oder eines Alkyl- oder Cycloalkylmethacrylates mit 1 bis 18, vorzugsweise 4 bis 13 Kohlenstoffatomen im Alkyl- bzw. Cycloalkylrest oder Mischungen aus solchen Monomeren,

(b)8 bis 60, vorzugsweise 12,5 bis 38,5 Gew.-%, eines Hydroxyalkylacrylates oder eines Hydroxylalkylmethacrylates mit 2 bis 4 Kohlenstoffatomen im Hydroxyalkylrest oder Mischungen aus solchen Monomeren,

(c) 0,0 bis 5,0, vorzugsweise 0,7 bis 3,0 Gew.-%, Acrylsäure oder Methacrylsäure oder Mischungen aus diesen Monomeren und

(d) 0 bis 50, vorzugsweise 0 bis 30 Gew.-%, von (a), (b) und (c) verschiedene, mit (a), (b) und (c) copolymerisierbare ethylenisch ungesättigte Monomere oder Mischungen aus solchen Monomeren

zu Polyacrylatharzen mit Hydroxylzahlen von 40 bis 240, vorzugsweise 60 bis 150, Säurezahlen von 0 bis 35, vorzugsweise von 5 bis 20, Glasübergangstemperaturen von -35 bis +70°C, bevorzugt von -20 bis +40°C und zahlenmittleren Molekulargewichten von 1.500 bis 30.000, vorzugsweise von 2.000 bis 15.000, (gelpermeationschromatographisch mit Polystyrolstandard bestimmt) polymerisiert werden.

Als Beispiele für (a)-Komponenten werden genannt: Methyl-, Ethyl-, Propyl-, n-Butyl-, Isobutyl-, tert.-Butyl-, Pentyl-, Hexyl-, Heptyl- und 2-Ethylhexylacrylat bzw. -methacrylat sowie Cyclohexylacrylat, Cyclohexylmethacrylat, tert.-Butylcyclohexylacrylat, tert.-Butylcyclohexylmethacrylat, Isobornylacrylat und Isobornylmethacrylat.

Als Beispiele für (b)-Komponenten werden genannt: Hydroxyethyl-, Hydroxypropyl- und Hydroxybutylacrylat bzw. -methacrylat.

Als Beispiele für (d)-Komponenten werden genannt: Vinylaromaten, wie beispielsweise Styrol, Vinyltoluol, $\alpha$-Methylstyrol, $\alpha$-Ethylstyrol, kernsubstituierte Diethylstyrole, Isopropylstyrol, Butylstyrole und Methoxystyrole; Vinylether, wie beispielsweise Ethylvinylether, n-Propylvinylether, Isopropylvinylether, n-Butylvinylether und Isobutylvinylether und Vinylester, wie beispielsweise Vinylacetat, Vinylpropionat, Vinylbutyrat, Vinylpivalat und der Vinylester von gesättigten, aliphatischen Monocarbonsäuren mit 9 bis 11 C-Atomen und mit einem tertiären $\alpha$-C-Atom (VeoVa® 9, VeoVa® 10, VeoVa® 11 u.ä.).

Die Hydroxylzahl und die Säurezahl der Polyacrylatharze kann der Fachmann problemlos durch die Menge an eingesetzter Komponente (b) bzw. (c) steuern.

Die Glasübergangstemperatur der Polyacrylatharze wird durch Art und Menge der eingesetzten Monomere bestimmt. Die Auswahl der Monomeren kann vom Fachmann unter Zuhilfenahme der folgenden Formel, mit der die Glasübergangstemperaturen von Polyacrylatharzen näherungsweise berechnet werden können, vorgenommen werden:

$$\frac{1}{T_G} = \sum_{n=1}^{n=x} \frac{W_n}{T_{Gn}}$$

$T_G$ = Glasübergangstemperatur des Polyacrylatharzes
x = Anzahl der im Polyacrylatharz einpolymerisierten verschiedenen Monomeren
$W_n$ = Gewichtsanteil des n-ten Monomers
$T_{Gn}$ = Glasübergangstemperatur des Homopolymers aus dem n-ten Monomer

Maßnahmen zur Steuerung des Molekulargewichtes (z.B. Auswahl entsprechender Polymerisationsinitiatoren, Einsatz von Kettenübertragungsmitteln usw.) gehören zum Fachwissen des Durchschnittsfachmanns und müssen hier nicht näher erläutert werden.

Als Komponente (A) werden auch besonders bevorzugt Polyesterharze bzw. Alkydharze eingesetzt, die herstellbar sind, indem

(α) eine cycloaliphatische oder aliphatische Polycarbonsäure oder eine Mischung aus solchen Polycarbonsäuren,

(β) ggf. eine oder mehrere aromatische Polycarbonsäuren,

(γ) ein aliphatisches oder cycloaliphatisches Polyol mit mehr als zwei Hydroxylgruppen im Molekül oder eine Mischung aus solchen Polyolen,

(δ) ein aliphatisches oder cycloaliphatisches Diol oder eine Mischung aus solchen Diolen und

(ε) ggf. (bei Alkydharzen) eine aliphatische lineare oder verzweigte gesättigte Monocarbonsäure oder eine Mischung aus solchen Monocarbonsäuren

in einem molaren Verhältnis von ((α) + (β)) : (γ) : (δ) : (ε) = 1,0 : 0,2 - 1,3 : 0,0 - 1,1 : 0,0 - 1,4, vorzugsweise 1,0 : 0,5 - 1,2 : 0,0 - 0,6 : 0,2 - 0,9 zu einem Polyesterharz bzw. Alkydharz umgesetzt werden.

Als Beispiele für die Komponente (α) werden genannt: Hexahydrophthalsäure, 1,4-Cyclohexandicarbonsäure, Endomethylentetrahydrcphthalsäure, Malonsäure, Bernsteinsäure, Glutarsäure, Adipinsäure, Pimelinsäure, Korksäure, Azelainsäure und Sebacinsäure.

Zusammen mit den cycloaliphatischen und/oder aliphatischen Polycarbonsäuren können als Komponente (β) ggf. aromatische Polycarbonsäuren, wie z.B. Phthalsäure, Isophthalsäure, Terephthalsäure, Halogenphthalsäuren, wie Tetrachlor- bzw. Tetrabromphthalsäure, Trimellithsäure, Pyromellithsäure u.ä. eingesetzt werden.

Als Beispiele für die Komponente (γ) werden genannt: Pentaerythrit, Trimethylolpropan, Trimethylolethan und Glycerin.

Als Beispiele für die Komponente (δ) werden genannt: Ethylenglykol, Diethylenglykol, Propylenglykol, Neopentylglykol, 2-Methyl-2-propylpropandiol-1,3, 2-Ethyl-2-butylpropandiol-1,3, 2,2,4-Trimethylpentandiol-1,5, 2,2,5-Trimethylhexandiol-1,6, Hydroxypivalinsäureneopentylglykolester und Dimethylolcyclohexan.

Als Beispiele für die Komponente (ε) werden genannt: 2-Ethylhexansäure, Laurinsäure, Isooctansäure, Isononansäure und Monocarbonsäuremischungen, die aus Kokosfett oder Palmkernfett gewonnen werden.

Die Herstellung von Hydroxylgruppen tragenden Polyester- und/oder Alkydharzen ist z.B. in Ullmanns Encyklopädie der technischen Chemie, dritte Auflage, 14. Band, Urban & Schwarzenberg, München, Berlin 1863, Seiten 80 bis 89 und Seiten 99 bis 105, in den Büchern: Résines Alkydes-Polyesters von J. Bourry, Paris Verlag Dunod 1952, Alkyd Resins von C.R. Martens, Reinhold Publishing Corporation, New York 1961 und Alkyd Resin Technology von T. C. Patton, Interscience Publishers 1962 beschrieben.

Es ist erfindungswesentlich, daß die Lacke als Vernetzer-Komponente (B) ein oder mehrere Di- und/oder Polyisocyanate enthalten, bei denen zur Verkappung der Isocyanatgruppen eine Mischung von Malonsäuredialkylestern verwendet wird, bestehend aus

b1) 30 bis 85 Gew.-%, bevorzugt 50 bis 70 Gew.-%, eines oder mehrerer Malonsäuredialkylester der allgemeinen Formel (I)

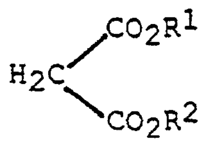

(I)

und/oder eines oder mehrerer Malonsäuredialkylester der allgemeinen der Formel (II)

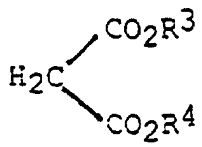

(II),

wobei

$R^1$, $R^2$ und $R^3$ jeweils gleiche oder verschiedene aliphatische und/oder cycloaliphatische und/oder araliphatische sekundäre Alkylreste mit mindestens 3 C-Atomen und
$R^4$ einen aliphatischen, cycloaliphatischen, oder araliphatischen Kchlenwasserstoffrest darstellen

und

b2) 70 bis 15 Gew.-%, bevorzugt 50 bis 30 Gew.-%, eines oder mehrerer, von der Komponente (b1) verschiedenen Malonsäuredialkylester,
wobei die Summe der Gewichtsanteile der Komponenten (b1) und (b2) jeweils 100 Gew.-% beträgt.

Bevorzugt werden als Komponente (b1) Malonsäuredialkylester der Formel (I) eingesetzt. Bevorzugt stellen $R^1$, $R^2$ und $R^3$ sekundäre Alkylreste mit 3 bis 18 C-Atomen und besonders bevorzugt mit maximal 8 C-Atomen, dar. Bevorzugt weist der Rest $R^4$ 1 bis maximal 18 C-Atome, besonders bevorzugt 1 bis 10 C-Atome, auf.
Als erfindungsgemäß eingesetztes Blockierungsmittel (b1) der Formeln (I) und (II) sind Ester der Malonsäure mit aliphatischen und/oder cycloaliphatischen und/oder araliphatischen sekundären Alkoholen, insbesondere Ester der Malonsäure mit 2-Propanol, 2-Butanolen, wie z.B. 2-Butanol, 3,3-Dimethylbutanol-2, 2-Pentanolen, wie z.B. Ester mit 3-Methylpentanol-2, 4-Methylpentanol-2, 3-Pentanolen, wie z.B. 3-Pentanol, 2-Methylpentanol-3, 1-Phenylpentanol-3, 2,2-Dimethylpentanol-3, 2, 4-Dimethylpentanol-3, 2-Hexanolen, wie z.B. 2-Bexanol, 3-Methylhexanol-2, 5-Methylhexanol-2, 3-Hexanolen, wie z.B. 3-Hexanol, 2,4-Dimethylhexanol-3, 5-Methylhexanol-3, sekundären-Nonanolen, sekundären-Decanolen und sekundären-Tricylalkoholen u.ä., geeignet. Es können jeweils auch gemischte Ester der Malonsäure als Blockierungsmittel eingesetzt werden.
Als Malonsäuredialkylester sekundärer Alkohole kommen bevorzugt die Malonsäureester von Iso-Propanol, 2-Butanolen, 2-Pentanolen und 3-Pentanolen, ganz besonders bevorzugt 2-Propanol, 2-Butanol, 2-Pentanol und 3-Pentanol zum Einsatz.
Die Malonsäuredialkylester sekundärer Alkohole werden erfindungsgemäß zusammen mit einem oder mehreren anderen Malonsäuredialkylestern (b2) eingesetzt. Als Beispiel für diese anderen Malonsäuredialkylester (b2) seien Ester der Malonsäure mit tertiären Alkoholen, insbesondere aber mit primären Alkoholen, wie beispielsweise Methanol, Ethanol, n-Propanol, n-Butanolen, iso-Butanolen, n-Pentanolen, iso-Pentanolen, n-Hexanolen, iso-Hexanolen, 2-Ethylhexanol, Isononanolen, Isodecanolen, Isotricylalkoholen, Fettalkoholen, Benzylalkohol u.ä. genannt. Es können wiederum jeweils auch gemischte Ester der Malonsäure als Blockierungsmittel (b2) eingesetzt werden.
Besonders bevorzugt wird erfindungsgemäß eine Mischung aus

b1) Malonsäureester(n) von Iso-Propanol, 2-Butanolen, 2-Pentanolen und/oder 3-Pentanolen und
b2) Dimethylmalonat und/oder Diethylmalonat eingesetzt.

Ganz besonders bevorzugt wird erfindungsgemäß eine Mischung aus

b1) Diisopropylmalonat und/oder Di-sek.-butylmalonat und
b2) Dimethylmalonat und/oder Diethylmalonat eingesetzt.

Prinzipiell können alle auf dem Lackgebiet einsetzbaren Polyisocyanate zur Herstellung der Komponente (B) eingesetzt werden. Es ist jedoch bevorzugt, Polyisocyanate einzusetzen, deren Isocyanatgruppen an aliphatische oder cycloaliphatische Reste gebunden sind. Beispiele für derartige Polyisocyanate sind Hexamethylendiisocyanat, Isophorondiisocyanat, Trimethylhexamethylendiisocyanat, Dicyclohexylmethandiisocyanat und 1,3-Bis-(2-isocyanatopropyl-2-)benzol (TMXDI) sowie deren Gemische oder von diesen Isocyanaten abgeleitete Oligomere. Als Oligomere dieser Polyisocyanate kommen beispielsweise Addukte an Polyole, insbesondere niedermolekulare Polyole, wie z.B. Trimethylolpropan, oder Polyesterpolyole und/oder Polyetherpolyole, sowie von diesen Polyisocyanaten abgeleitete isocyanuratgruppen- und/oder biuretgruppen-und/oder allophanatgruppen- und/oder uretdiongruppenhaltige und/oder carbodiimidgruppenhaltige Polyisocyanate oder Gemische solcher Verbindungen in Betracht.

Als Polyisocyanate werden besonders bevorzugt Hexamethylendiisocyanat und/oder Isophorondiisocyanat, von diesen Diisocyanaten abgeleitete isocyanurat- oder biuretgruppenhaltige Polyisocyanate, die vorzugsweise mehr als zwei Isocyanatgruppen im Molekül enthalten sowie Umsetzungsprodukte aus Hexamethylendiisocyanat und Isophorondiisocyanat oder einer Mischung aus Hexamethylendiisocyanat und Isophorondiisocyanat mit 0,3 - 0,5 Äquivalenten eines niedermolekularen Polyols mit einem Molekulargewicht von 62 bis 500, vorzugsweise von 104 bis 204, insbesondere eines Triols, wie zum Beispiel Trimethylolpropan, eingesetzt.

Die Herstellung der Komponente (B) kann beispielsweise dadurch erfolgen, daß ein Polyisocyanat oder eine Mischung aus Polyisocyanaten in an sich bekannter Art und Weise mit der Mischung aus einem oder mehreren Malonsäureestern (b1) und einem oder mehreren davon verschiedenen Malonsäuredialkylestern (b2) umgesetzt wird. Es ist dabei nur wesentlich, daß die Mengen an den einzelnen Malonsäuredialkylestern so gewählt werden, daß 30 bis 85 Gew.-%, bevorzugt 50 bis 70 Gew.-%, des zur Verkappung der Isocyanatgruppen der Komponente (B) verwendeten Malonsäuredialkylesters ein oder mehrere Malonsäuredialkylester der Formeln (I) und/oder (II) sind.

Die Umsetzung des Polyisocyanates bzw. der Mischung der Polyisocyanate erfolgt in bekannter Weise bei Temperaturen, die im allgemeinen zwischen 50 und 130 °C liegen. Diese Umsetzung kann in nichtprotischen Lösemitteln, wie z.B. aromatischen Kohlenwasserstoffen, Estern, Ketonen, Glykoletherestern, aliphatischen und/oder cycloaliphatischen Kohlenwasserstoffen, durchgeführt werden. Üblicherweise erfolgt die Umsetzung in Gegenwart basischer Katalysatoren, wie z.B. Alkalialkoholaten, Alkaliphenolaten oder Alkalisalzen von Alkancarbonsäuren bzw. deren Derivaten, vorzugsweise Natriumsalzen der genannten Verbindungen.

Das Polyisocyanat bzw. die Mischung aus Polyisocyanaten kann mit den Malonaten so weit umgesetzt werden, bis das gewünschte NCO-Äquivalentgewicht erreicht ist. Die Umsetzung kann dabei solange fortgeführt werden, bis keine Isocyanatgruppen mehr nachweisbar sind. In der Praxis kann das den Einsatz von sehr großen Überschüssen an Blockierungsmitteln und/oder sehr lange Reaktionszeiten erfordern.

Es wurde nun gefunden, daß auch dann Lacke mit den oben beschriebenen guten Eigenschaften erhalten werden, wenn mindestens 50 %, vorzugsweise mindestens 90 %, der Isocyanatgruppen des Polyisocyanates bzw. des Gemisches aus Polyisocyanaten mit den Malonaten umgesetzt werden und die verbleibenden Isocyanatgruppen mit einer hydroxylgruppenhaltigen Verbindung oder einer Mischung aus hydroxylgruppenhaltigen Verbindungen umgesetzt werden. Als hydroxylgruppenhaltige Verbindungen werden vorzugsweise niedermolekulare aliphatische oder cycloaliphatische Polyole, wie Neopentylglykol, Dimethylolcyclohexan, Ethylenglykol, Diethylenglykol, Propylenglykol, 2-Methyl-2-propylpropandiol-1,3, 2-Ethyl-2-butylpropandiol-1,3, 2,2,4-Trimethylpentandiol-1,5 und 2,2,5-Trimethylhexandiol-1,6 oder die als Komponente (A) einsetzbaren hydroxylgruppenhaltigen Kunstharze eingesetzt.

Die Komponente (B) ist auch erhältlich, indem mit verschiedenen Malonestern blockierte Polyisocyanate in einem solchen Verhältnis gemischt werden, daß eine Mischung erhalten wird, in der das o.g. Verhältnis der Malonester mit sekundären Alkoholen gewährleistet ist. Diese Verfahrensweise zur Herstellung der Komponente (B) ist weniger bevorzugt.

Es wurde überraschenderweise gefunden, daß die mit Malonsäuredialkylestern höherer Alkohole verkappten Polyisocyanate besonders leicht herstellbar sind, indem

1.)die Isocyanatgruppen des Di- und/oder Polyisocyanates zumindest teilweise mit Dimethylmalonat und/oder Diethylmalonat umgesetzt werden,

2.) ggf. das in Stufe (1) erhaltene Reaktionsprodukt mit einer hydroxylgruppenhaltigen Verbindung oder einer Mischung hydroxylgruppenhaltiger Verbindungen umgesetzt wird und

3.) das in Stufe (1) bzw. (2) erhaltene Reaktionsprodukt mit einem aliphatischen und/oder cycloaliphatischen und/oder araliphatischen Alkohol mit mindestens 3 C-Atomen, bevorzugt sekundären Alkoholen, oder einer Mischung solcher Alkohole umgesetzt wird.

Dieses Verfahren wird bevorzugt zur Herstellung der Malonsäuredialkylester der Formeln (I) und (II) eingesetzt und die mittels dieses Verfahrens hergestellten blockierten Isocyanate werden bevorzugt als Komponente (B) in

den erfindungsgemäßen Lacken eingesetzt.

Die Stufe (1) des Verfahrens ist bekannt und beispielsweise in der DE-A- 42 04 518 beschrieben. Die Reaktionsbedingungen entsprechen i.a. den Bedingungen, die oben für die Umsetzung mit den Malonestern sekundärer Alkohole angegeben wurden.

Es ist besonders bevorzugt, daß in Stufe (1) des Verfahrens die Isocyanatgruppen des Di- und/oder Polyisocyanates nur teilweise mit Dimethylmalonat und/oder Diethylmalonat umgesetzt werden, d.h. daß das in Stufe (1) erhaltene Reaktionsprodukt noch freie Isocyanatgruppen aufweist.

Dieses in Stufe (1) erhaltene Reaktionsprodukt mit freien Isocyanatgruppen kann dann in einem besonders bevorzugten Verfahren mit einer hydroxylgruppenhaltigen Verbindung oder einer Mischung hydroxylgruppenhaltiger Verbindungen umgesetzt werden (Stufe (2) des Verfahrens). Als hydroxylgruppenhaltige Verbindungen werden bevorzugt niedermolekulare aliphatische oder cycloaliphatische Polyole, Polyesterpolyole und/oder Polyetherpolyole eingesetzt. Beispiele für geeignete Verbindungen sind die bereits bei der Beschreibung der Polyisocyanate genannten Verbindungen sowie die als Komponente (A) aufgeführten Kunstharze. Bei diesem besonders bevorzugten Verfahren kann man auch in Stufe (1) von einem Diisocyanat ausgehen und die Oligomerisierung zu einen Urethan o.ä. nach der Teilverkappung (Stufe (1)) in dieser Stufe (2) durchführen.

Das in Stufe (1) oder (2) erhaltene Reaktionsprodukt wird dann in Stufe (3) des Verfahrens mit dem gewünschten Alkohol (aliphatischer und/oder cycloaliphatischer und/oder araliphatischer Alkohol mit mehr als 2 C-Atomen oder eine Mischung solcher Alkohole, bevorzugt sekundärer Alkohol) umgesetzt. Diese Umsetzung (Umesterung) erfolgt üblicherweise bei Temperaturen zwischen 80 und 150 °C, bevorzugt zwischen 110 und 130 °C. Das bei dieser Umesterung freiwerdende Methanol und/oder Ethanol wird im allgemeinen abdestiliiert. Falls das in Stufe (3) eingesetzte Reaktionsprodukt noch freie Isocyanatgruppen hat, so erfolgt neben der Umesterung selbstverständlich auch noch eine Urethanisierung.

Diese Urethanisierung läuft mit den genannten höheren Alkoholen schneller ab als die Umesterung. Es wurde ferner gefunden, daß im allgemeinen eine Umurethanisierung unter Abspaltung des Malonesters nur begrenzt stattfindet. Ferner ist es möglich, die Umesterungsreaktion so zu führen, daß nur Teile des ursprünglichen Malonsäuredimethylesters bzw. Malonsäurediethylesters umgeestert werden.

Die Komponenten (A) und (B) werden in den erfindungsgemäßen Lacken bevorzugt in solchen Mengen eingesetzt, daß das Äquivalentverhältnis der der Hydroxylgruppen der Komponente (A) zu den Isocyanatgruppen der Komponente (B) zwischen 1,6 : 1 und 0,7 : 1, bevorzugt zwischen 1,3 : 1 und 0,9 : 1, liegt.

Ferner können die erfindungsgemäßen Lacke ggf. noch ein oder mehrere weitere Vernetzer, beispielsweise Aminoplastharze oder mit anderen Verkappungsmitteln blokkierte Polyisocyanate, als Komponente (C) enthalten.

Als Komponente (C) kann im Prinzip jedes, insbesondere jedes für transparente Decklacke geeignete Aminoplastharz oder eine Mischung aus solchen Aminoplastharzen eingesetzt werden.

Derartige Harze sind dem Fachmann gut bekannt und werden von vielen Firmen als Verkaufsprodukte angeboten. Aminoplastharze sind Kondensationsprodukte aus Aldehyden, insbesondere Formaldehyd und beispielsweise Harnstoff, Melamin, Guanamin und Benzoguanamin. Die Aminoplastharze enthalten Alkohol-, vorzugsweise Methylolgruppen, die in der Regel teilweise oder bevorzugt vollständig mit Alkoholen verethert sind.

Als Komponente (C) werden vorzugsweise mit niedrigen Alkoholen, insbesondere mit Methanol oder Butanol veretherte Melamin-Formaldehydharze eingesetzt. Besonders bevorzugt werden mit niedrigen Alkoholen, insbesondere mit Methanol und/oder Butanol veretherte Melamin-Formaldehydharze, die im statistischen Mittel pro Triazinring noch 0,1 bis 0,25 an Stickstoffatome gebundene Wasserstoffatome enthalten, eingesetzt.

Als Komponente (C) können mit den Hydroxylgruppen des Bindemittels unter Esterbildung vernetzende Komponenten auf Triazinbasis eingesetzt werden. Bei den unter Estergruppenbildung mit den Hydroxylgruppen des Bindemittels reagierenden Vernetzern auf Triazin-Basis handelt es sich um Umesterungsvernetzer, wie bevorzugt Tris (alkoxycarbonylamino)triazin o.ä., wie beispielsweise auch in der EP-A-604 922 beschrieben.

Falls die Lacke die Komponente (C) enthalten, wird die Komponente (C) üblicherweise in einer Menge von 3 bis 30 Gew.-%,, bevorzugt 10 bis 15 Gew.-%, bezogen auf das Gewicht des Bindemittels, eingesetzt. Falls die Lacke die Komponente (C) enthalten, wird die jeweils eingesetzte Menge des Vernetzers (B) entsprechend reduziert, d.h. i. a um ca. die Hälfte der Menge reduziert.

Die erfindungsgemäßen Lacke können als wäßrige, insbesondere aber als lösemittelhaltige, flüsssige Lacke formuliert werden. Falls die Lacke als wäßrige Lacke formuliert werden, werden die üblichen Methoden eingesetzt, um die blockierten Polyisocyanate stabil in der wäßrigen Phase verteilen zu können. Dies kann in dem Fachmann bekannter Weise beispielsweise unter Verwendung eines Trägerharzes, der Verwendung von Emulgatoren oder durch Einbau von hydrophilen Gruppen, wie z.B. Säuregruppen, erfolgen.

Als organische Lösemittel enthalten die nichtwäßrigen Lacke übliche zur Herstellung von Lacken gebräuchliche organische Lösemittel in üblichen Mengen.

Es ist aber auch möglich - wenn die Glasübergangstemperatur der verkappten Polyisocyanate und die Glasübergangstemperatur der Komponente (A) ausreichend hoch ist (i.a. höher als 80 °C) - die erfindungsgemäßen Lacke

als Pulverlacke oder als Powder-Slurries (wäßrige Dispersionen von zunächst als Feststoffmischungen hergestellten Systemen) zu formulieren.

Die erfindungsgemäßen Lacke können außerdem noch weitere, für die jeweilige Formulierung gebräuchliche Zusätze, wie z.B. Stabilisatoren wie Lichtschutzmittel, Antioxidantien und Radikalfänger, Verlaufshilfsmittel, Rheologieadditive, Rieselhilfen usw. enthalten, bevorzugt in einer Menge von 0,2 bis 5,0 Gew.-%, bezogen auf das Gesamtgewicht des Lackes.

Die erfindungsgemäßen Lacke können ggf. auch übliche Pigmente und/oder Füllstoffe enthalten. Die Menge an eingesetzten Pigmenten und/oder Füllstoffen wird i.a. so gewählt, daß die in Schichtdicken von 25 bis 50 µm geforderte Farbgebung erreicht wird. Die Menge beträgt daher im allgemeinen 0,9 bis 30 Gew.-%, bezogen auf das Gesamtgewicht des Lackes. Werden sie als transparente Decklacke eingesetzt, enthalten sie keine bzw. nur transparente Pigmente.

Die erfindungsgemäßen Lacke eignen sich auch zur Herstellung von Mehrschichtlackierungen. Dabei können sie als Basislacke und bevorzugt als Klarlacke eingesetzt werden. Gegenstand der vorliegenden Erfindung ist daher auch ein Verfahren zur Herstellung einer Mehrschichtlackierung, bei dem

(1) ein pigmentierter Basislack auf die Substratoberfläche angebracht wird,

(2) aus dem in Stufe (1) aufgebrachten Basislack ein Polymerfilm gebildet wird,

(3) auf der so erhaltenen Basislackschicht ein nichtwäßriger transparenter Decklack aufgebracht wird und anschließend

(4) Basislackschicht und Decklackschicht zusammen eingebrannt werden,

dadurch gekennzeichnet, daß der Basislack und/oder der Decklack ein erfindungsgemäßer Lack sind.

In der Stufe (I) des erfindungsgemäßen Verfahrens können außer den erfindungsgemäßen Lacken im Prinzip alle zur Herstellung von zweischichtigen Lackierungen geeigneten pigmentierten Basislacke eingesetzt werden. Derartige Basislacke sind dem Fachmann gut bekannt. Es können sowohl wasserverdünnbare Basislacke als auch Basislacke auf Basis von organischen Lösemitteln eingesetzt werden. Geeignete Basislacke werden beispielsweise beschrieben in der US-A-3,639,147, DE-A-33 33 072, DE-A-38 14 853, GB-A-2 012 191, US-A-3,953,644, EP-A-260 447, DE-A-39 03 804, EP-A-320 552, DE-A-36 28 124, US-A-4,719,132, EP-A-297 576, EP-A-69 936, EP-A-89 497, EP-A-195 931, EP-A-228 003, EP-A-38 127 und DE-A-28 18 100. In diesen Patentdokumenten sind auch weitere Informationen über das in Rede stehende basecoat/clearcoat-Verfahren zu finden.

In Stufe (2) des erfindungsgemäßen Verfahrens werden dem in Stufe (1) applizierten Basislack in einer Abdunstphase die Lösemittel bzw. das Wasser entzogen. Die Basislackschicht kann auch eingebrannt werden, was aber aus ökonomischen Gründen nachteilig ist, weil dann zur Herstellung der Zweischichtlackierung 2 anstelle von einem Einbrennvorgang benötigt werden.

In Stufe (3) des erfindungsgemäßen Verfahrens wird der erfindungsgemäße transparente Decklack eingesetzt.

Die mit den erfindungsgemäß eingesetzten Decklacken hergestellten Zweischichtlackierungen weisen die vorteilhaften Eigenschaften insbesondere auch dann auf, wenn sie unter den zur Zeit bei der Automobilserienlackierung angewandten Einbrennbedingungen (30 Minuten bei 110°C bis 10 Minuten bei 150°C, bevorzugt 30 Minuten 130 °C) eingebrannt worden sind.

Die erfindungsgemäßen Lacke können selbstverständlich aber auch für andere Lackierungen eingesetzt werden.
Sie können daher auch auf andere Substrate, wie beispielsweise Metall, Holz oder Papier, appliziert werden. Die Applikation erfolgt mit Hilfe üblicher Methoden, beispielsweise Spritzen, Rakeln, Walzen, Tauchen oder Streichen.

Mit erfindungsgemäßen nichtwäßrigen Lacken können auch grundierte oder nicht grundierte Kunststoffe wie z. B. ABS, AMMA, ASA, CA, CAB, EP, UF, CF, MF, MPF, PF, PAN, PA, PC, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert werden. Die zu lackierenden Kunststoffe können selbstverständlich auch Polymerblends, modifizierte Kunststoffe oder faserverstärkte Kunststoffe sein. Sie können auch für die Beschichtung von üblicherweise im Fahrzeugbau, insbesondere Kraftfahrzeugbau, eingesetzten Kunststoffe zum Einsatz kommen. Voraussetzung ist aber selbstverständlich jeweils, daß die Substrate die Einbrenntemperaturen von beispielsweise 90 °C für 45 Minuten vertragen.

Im Falle von nichtfunktionalisierten und/oder unpolaren Substratoberflächen müssen diese vor der Beschichtung in bekannter Weise einer Vorbehandlung, wie Plasma oder Beflammen, unterzogen werden.

Die Erfindung wird in den folgenden Beispielen näher erläutert. Alle Mengen- und Prozentangaben sind, wenn

nicht ausdrücklich etwas anderes festgestellt wird, als Gewichtsangaben zu verstehen.

1. Herstellung einer Acrylatharzlösung (Komponente (A))

In einen Doppelwand-Labor-Edelstahl-Reaktor, ausgestattet mit einem Rückflußkühler, einer regelbaren Heizung durch ein Ölumlaufthermostat, einem Blattrührer mit Rührverschluß, einem Thermometer zur Kontrolle der Temperatur des Reaktionsguts, einem Einleitrohr für einen Stickstoffschutzgasstrom und je einem Dosiergefäß für eine Monomerenmischung und eine Initiatorlösung werden 870 g eines handelsüblichen Lösemittels aus einer Fraktion aromatischer Kohlenwasserstoffe mit einem Siedebereich von 158°C bis 172°C bei Normaldruck eingewogen. Das Lösemittel wird unter Rühren auf 140°C aufgeheizt. Dann wird aus dem Dosiergefäß für die Initiatorlösung eine Lösung von 87 g tert.-Butylper-2-ethylhexanoat in 87 g des obenbeschriebenen aromatischen Lösemittels innerhalb von 0,75 h gleichmäßig in den Reaktor dosiert. 0,25 h nach dem Start der Initiatorzugabe wird aus dem Dosiergefäß für die Monomerenmischung eine Mischung aus 291 g Styrol, 367 g n-Butylacrylat, 364 g n-Butylmethacrylat, 405 g 2-Hydroxypropylacrylat und 29,0 g Acrylsäure innerhalb von 4 h gleichmäßig in den Reaktor dosiert. Die Temperatur wird dabei auf 140°C gehalten. Nach Beendigung der Iniatorzugabe wird das Reaktionsgut für weitere 1,5 Stunden auf 140°C gehalten, dann wird der Grad des Umsatzes durch mehrfache Bestimmung des nichtflüchtigen Anteils der Reaktionsmischung (in einem Umluftofen 15 min. bei 180°C) und Bestimmung der Viskosität bestimmt. Die resultierende Polymerlösung hat einen nichtflüchtigen Anteil (gemessen in einem Umluftofen 60 min. bei 130°C) von 60,2 %. Das Polymer hat eine Säurezahl von 21,6 mgKOH/g, eine OH-Zahl von 120 mgKOH/g (beides bezogen auf den nichtflüchtigen Anteil) und eine Lösungsviskosität von 825 mPa•s, gemessen an der beschriebenen Lösung in einem ICI-Platte-Kegel-Viskosimeter bei 23°C.

2.Herstellung verschiedener Vernetzerkomponenten (B)

2.1. Herstellung eines verkappten Polyisocyanates (B1)

In die unter Punkt 1 beschriebene Apparatur, ausgestattet mit einem Dosiergefäß und einem Rückflußkühler, werden 869,0 g eines handelsüblichen Isocyanurattrimeren des Hexamethylendiisocyanats und 558,0 g des unter Punkt 1 beschriebenen aromatischen Lösemittels eingewogen. Die Lösung wird unter Rühren auf 50°C erwärmt. Dann wird aus dem Dosiergefäß eine Mischung aus 891,0 g Diisopropylmalonat und 7,5 g einer 50 %-igen Lösung von Natrium-p-dodecylphenolat in Xylol in einem Zeitraum von 1,5 Stunden so in die Lösung dosiert, daß die Temperatur 70°C nicht überschreitet. Nach dem Zulauf wird die Temperatur für 3 Stunden bei 70 °C gehalten. Dann werden weitere 2,5 g Natrium-p-dodecylphenolatlösung zugegeben und es wird so lange bei 70°C gehalten, bis das NCO-Äquivalentgewicht 13.000 erreicht ist. Dann werden 175 g n-Butanol zugegeben und 30 min bei 70 °C gerührt und danach abgekühlt. Die erhaltene Lösung hat einen nichtflüchtigen Anteil von 47,1 % (gemessen in einem Umluftofen 60 min. bei 130°C) und eine Viskosität von 345 mPa•s, gemessen in einem ICI-Platte-Kegel-Viskosimeter bei 23°C. Das potentielle NCO-Äquivalentgewicht der Lösung ist 598 g/mol.

2.2. Herstellung eines verkappten Polyisocyanates (B2)

In die unter Punkt 1 beschriebene Apparatur, ausgestattet mit einem Dosiergefäß und einem Rückflußkühler, werden 871,0 g eines handelsüblichen Isocyanurattrimeren des Hexamethylendiisocyanats eingewogen und unter Rühren auf 50 °C erhitzt. Dann wird aus dem Dosiergefäß eine Mischung aus 844,0 g Diethylmalonat und 5 g einer 50 %-igen Lösung von Natrium-p-dodecylphenolat in Xylol in einem Zeitraum von 1,5 Stunden so in die Lösung dosiert, daß die Temperatur 70°C nicht überschreitet. Nach dem Zulauf wird die Temperatur für 3 Stunden bei 70 °C gehalten. Dann werden weitere 2,5 g Natrium-p-dodecylphenolatlösung zugegeben und es wird so lange bei 70°C gehalten, bis das NCO-Äquivalentgewicht 7.500 erreicht ist.

Dann wird eine Destillationsbrücke und Kolonne mit Kopftemperaturmessung auf den Reaktor aufgesetzt. Dann werden 689 g Butanol-2 und 303 g des unter Punkt 1 beschriebenen aromatischen Lösemittels zugegeben und die Temperatur langsam auf 130 °C gesteigert. Es werden insgesamt 430 g aus dem Reaktionsgemisch abdestilliert. Die erhaltene Lösung des Polyisocyanates, das z.T. mit Estern der Malonsäure mit 2-Butanol verkappt ist, hat einen nichtflüchtigen Anteil von 53,4 % (gemessen in einem Umluftofen 1 h bei 130°C) und eine Viskosität von 1600 mPa•s, gemessen in einem ICI-Platte-Kegel-Viskosimeter bei 23°C. Das potentielle NCO-Äquivalentgewicht der Lösung ist 537 g/mol. Eine GC-Untersuchungin einer physikalisch vorgetrockneten Probe einer Umsetzung mit OH-Polymer liefert als Abspaltprodukte neben kleinen Anteilen der Malonate Ethanol und 2-Butanol im molaren Verhältnis von 23 : 77.

2.3. Herstellung eines verkappten Polyisocyanates (B3)

Es wird analog zur Herstellung des verkappten Polyisocyanates B1 verfahren mit dem einzigen Unterschied, daß anstelle des Diisopropylmalonats nun 758 g Diethylmalonat zugegeben werden. Nach dem Anlösen resultiert ein verkapptes Polyisocyanat mit einem nichtflüchtigen Anteil von 51 % (gemessen in einem Umluftofen 1 h bei 130°C) und eine Viskosität von 495 mPa•s, gemessen in einem ICI-Platte-Kegel-Viskosimeter bei 23°C. Das potentielle NCO-Äquivalentgewicht der Lösung ist 534 g/mol.

Beispiele 1 und 2 sowie Vergleichsbeispiel V1

Aus den in Tabelle 1 angegebenen Komponenten werden die Lacke der Beispiele 1 und 2 sowie des Vergleichsbeispiels 1 folgendermaßen hergestellt. Das obenbeschriebene Acrylatharz wird mit

1.) einer Mischung aus dem blockierten Polyisocyanat B1 und dem blockierten Polyisocyanat 33 (Beispiel 1) bzw.

2.) dem blockierten Polyisocyanat B2 (Beispiel 2) bzw.

3.) dem blockierten Polyisocyanat B3 (Vergleichsbeispiel 1)

gemischt, sodaß das Verhältnis von OH-Gruppen des Acrylatharzes zu den verkappten Isocyanatgruppen 1 : 1 beträgt. Es wird dann mit einer in Tabelle 1 beschriebenen Mischung aus dem unter Punkt 1 beschriebenen aromatischen Lösemittel, Butylacetat und Butanol auf einen nichtflüchtigen Anteil von 50,0 % verdünnt. Es werden 0,5 % eines handelsüblichen Verlaufsmittels aus einem modifizierten Silikonöl, gelöst 5%ig in Xylol, zugegeben.

Auf Stahltafeln, die mit einem handelsüblichen kationisch abgeschiedenen Elektrotauchlack und einem handelsüblichen lösemittelhaltigen Füller auf Basis Polyester und Melaminharz beschichtet sind, wird ein handelsüblicher Wasserbasislack, wie er beschrieben ist in der EP-A-089 497, so in zwei Spritzgängen mit 1 Minute Zwischenablüftzeit aufgebracht, daß eine Trockenfilmdicke von 14 µm resultiert. Dann wird 5 Minuten bei Raumtemperatur abgelüftet und dann in zwei Spritzgängen der Lack der Beispiele 1 bzw. 2 bzw. des Vergleichsbeispiels V1 so aufgebracht, daß eine Trockenfilmdicke von 40 µm resultiert. Die Tafel wird 5 Minuten bei Raumtemperatur abgelüftet und dann 30 Minuten bei 130°C eingebrannt.

Die Lösung aus der Mischung des blockierten Polyisocyanates B1 und B3 sowie die Lösung des blockierten Polyisocyanates B2 sind über mehr als 6 Monate bei Lagerung bei Raumtemperatur stabil. Die Lösung des blockierten Polyisocyanates B3 kristallisiert nach wenigen Tagen Lagerung bei Raumtemperatur.

Die Lacke mit der Mischung des blockierten Polyisocyanates B1 und B3 sowie der Lack mit dem blockierten Polyisocyanat B2 sind nach Lagerung 3 Wochen bei einer Temperatur von 40 °C stabil und sie zeigen einen nur leichten Anstieg der Viskosität. Der Lack mit dem blockierten Polyisocyanat B3 ist nach 1 Woche Lagerung bei einer Temperatur von 40 °C trübe und zeigt einen stärkeren Anstieg der Viskosität.

Die Klarlackfilme der Beispiele 1 und 2 sind gut säurebeständig, zeigen keine merkliche Vergilbung über einem silbernen Basislack und sind kratzbeständig. Der Klarlackfilm des Vergleichsbeispiels 1 ist weniger vergilbungsbeständig, weniger hart und weniger glänzend.

Tabelle 1:

| Zusammensetzung der Lacke | | | |
|---|---|---|---|
| | Beispiel 1 | Beispiel 2 | Vergleichsbeispiel 1 |
| Acrylat (A) | 52,12 | 53,36 | 53,10 |
| Vernetzer (B1) | 20,06 | - | - |
| Vernetzer (B2) | - | 36,89 | - |
| Vernetzer (B3) | 17,91 | - | 36,50 |
| aromat. LM | 6,94 | 6,82 | 7,28 |
| BA | 1,98 | 1,95 | 2,08 |
| n-Bu | 0,99 | 0,98 | 1,04 |
| Summe | 100,00 | 100,00 | 100,00 |
| Silikonöl | 0,50 | 0,50 | 0,50 |

**Patentansprüche**

1. Lacke, enthaltend

A) ein hydroxylgruppenhaltiges Polymer oder eine Mischung aus hydroxylgruppenhaltigen Polymeren und

B) ein oder mehrere blockierte Di- und/oder Polyisocyanate, dessen Isocyanatgruppen zumindest teilweise mit Malonsäuredialkylester blockiert sind,

**dadurch gekennzeichnet, daß** zur Verkappung der Isocyanatgruppen der Komponente (B) eine Mischung von Malonsäuredialkylestern aus

b1) 30 bis 85 Gew.-% eines oder mehrerer Malonsäuredialkylester der allgemeinen Formel (I)

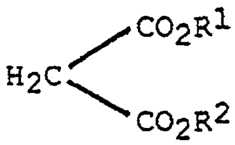

(I)

und/oder eines oder mehrerer Malonsäuredialkylester der allgemeinen der Formel (II)

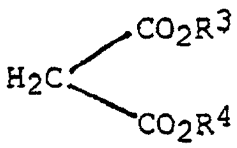

(II),

wobei $R^1$, $R^2$ und $R^3$ jeweils gleiche oder verschiedene aliphatische und/oder cycloaliphatische und/oder araliphatische sekundäre Alkylreste mit mindestens 3 C-Atomen und
$R^4$ einen aliphatischen, cycloaliphatischen, oder araliphatischen Kohlenwasserstoffrest darstellen
und

b2) 70 bis 15 Gew.-% eines oder mehrerer, von der Komponente (b1) verschiedenen Malonsäuredialkylesters,

verwendet wird, wobei die Summe der Gewichtsanteile der Komponenten (b1) und (b2) 100 Gew.-% beträgt.

2. Lacke nach Anspruch 1, **dadurch gekennzeichnet, daß** 50 bis 70 Gew.-% des zur Verkappung der Isocyanatgruppen der Komponente (B) verwendeten Malonsäuredialkylesters ein oder mehrere Dialkylester der Malonsäure der Formel (I) und/oder ein oder mehrere Dialkylester der Malonsäure der Formel (II) sind.

3. Lack nach Anspruch 1 oder 2, **dadurch gekennzeichnet, daß** $R^1$ und/oder $R^2$ und/oder $R^3$ ausgewählt sind aus der Gruppe 2-Propanol, 2-Butanole, 2-Pentanole, 3-Pentanole, 2-Hexanole, 3-Hexanole, sekundären-Nonanole, sekundären-Decanole und sekundären-Tricylalkoholen.

4. Lack nach einem der Ansprüche 1 bis 3, **dadurch gekennzeichnet, daß** mindestens 50 %, bevorzugt mindestens 90 % der Isocyanatgruppen des Di- und/oder Polyisocyanates mit den Dialkylmalonaten (b1) und (b2) und die restlichen Isocyanatgruppen des Diund/oder Polyisocyanates mit einer oder mehreren hydroxylgruppenhaltigen Verbindungen umgesetzt worden sind.

5. Lack nach einem der Ansprüche 1 bis 4, **dadurch gekennzeichnet, daß** die in der Komponente (B) enthaltenen blockierten Isocyanatgruppen an aliphatische oder cycloaliphatische Reste gebunden sind.

6. Lack nach einem der Ansprüche 1 bis 5, **dadurch gekennzeichnet, daß** als Komponente (B) blockierte Isocyanate auf Basis von Hexamethylendiisocyanat und/oder Isophorondiisocyanat und/oder von diesen Diisocyanaten abgeleitete isocyanurat- oder biuretgruppenhaltige Polyisocyanate eingesetzt werden.

**7.** Lack nach einem der Ansprüche 1 bis 6, **dadurch gekennzeichnet, daß** die Komponente (A) eine OH-Zahl von 40 bis 240, bevorzugt von 60 bis 150 mgKOH/g, aufweist und/oder daß die Komponenten (A) und (B) in solchen Mengen eingesetzt werden, daß das Äquivalentverhältnis der Hydroxylgruppen der Komponente (A) zu den Isocyanatgruppen der Komponente (B) zwischen 1,6 : 1 und 0,7 : 1, bevorzugt zwischen 1,3 : 1 und 0,9 : 1, liegt.

**8.** Verfahren zur Herstellung von Lacken gemäß Anspruch 1, **dadurch gekennzeichnet, daß** die Blockierung der Di- und/oder Polyisocyanate B) mit Malonsäuredialkylestern in folgenden Stufen durchgeführt wird:

1.) die Isocyanatgruppen eines Di - und/oder Polyisocyanates werden zumindest teilweise mit Dimethylmalonat und/oder Diethylmalonat umgesetzt,

2.) ggf. wird das in Stufe 1) erhaltene Reaktionsprodukt mit einer oder mehreren hydroxylgruppenhaltigen Verbindungen umgesetzt und

3.) das erhaltene Reaktionsprodukt wird mit einem aliphatischen und/oder cycloaliphatischen und/oder araliphatischem sekundären Alkohol mit mindestens 3 C-Atomen oder einer Mischung solcher Alkohole umgesetzt.

**9.** Verfahren zur Herstellung von Lacken, insbesondere von Basis- und/oder Decklacken, bei dem eine hydroxylgruppenhaltige Komponente und eine Vernetzerkomponente gemischt und ggf. dispergiert werden, **dadurch gekennzeichnet, daß** Lacke nach einem der Ansprüche 1 bis 7 hergestellt werden.

**10.** Verfahren nach Anspruch 10, **dadurch gekennzeichnet, daß** die Vernetzerkomponente (B) unter Verwendung des Verfahrens nach Anspruch 9 hergestellt worden ist.

**11.** Verwendung eines Lackes nach einem der Ansprüche 1 bis 7 für eine Mehrschichtlackierüng mit pigmentiertem Basislack und nicht wäßrigem transparenten Decklack, der auf einen Polymerfilm des Basislackes aufgegeben und zusammen mit der Basislackschicht eingebrannt wird.

## Claims

**1.** A coating material comprising

A) a hydroxyl-containing polymer or a mixture of hydroxyl-containing polymers, and

B) one or more blocked di- and/or polyisocyanates at least some of whose isocyanate groups are blocked with dialkyl malonate,

wherein the isocyanate groups of component (B) are blocked using a mixture of dialkyl malonates comprising

b1) from 30 to 85% by weight of one or more dialkyl malonates of the general formula (I)

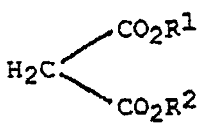

(I)

and/or one or more dialkyl malonates of the general formula (II)

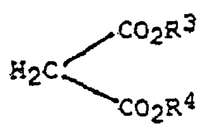

(II),

and/or araliphatic secondary alkyl radicals having at least 3 carbon atoms, and

$R^4$ is an aliphatic, cycloaliphatic or araliphatic hydrocarbon radical, and

b2) from 70 to 15% by weight of one or more dialky malonates other than component (b1),

the sum of the weight fractions of components (b1) and (b2) being 100% by weight.

**2.** The coating material as claimed in claim 1, wherein from 50 to 70% by weight of the dialkyl malonate used to block the isocyanate groups of component (B) comprises one or more dialkyl esters of malonic acid of the formula (I) and/or one or more dialkyl esters of malonic acid of the formula (II).

**3.** The coating material as claimed in claim 1 or 2, wherein $R^1$ and/or $R^2$ and/or $R^3$ are selected from the group consisting of 2-propanol, 2-butanols, 2-pentanols, 3-pentanols, 2-hexanols, 3-hexanols, secondary nonanols, secondary decanols and secondary tridecyl alcohols.

**4.** The coating material as claimed in any one of claims 1 to 3, wherein at least 50%, preferably at least 90% of the isocyanate groups of the di-and/or isocyanate have been reacted with the dialkyl malonates (b1) and (b2) and the remaining isocyanate groups of the di- and/or polyisocyanate have been reacted with one or more hydroxyl-containing compounds.

**5.** The coating material as claimed in any one of claims 1 to 4, wherein the blocked isocyanate groups present in component (B) are attached to aliphatic or cycloaliphatic radicals.

**6.** The coating material as claimed in any one of claims 1 to 5, wherein as component (B) use is made of blocked isocyanates based on hexamethylene diisocyanate and/or isophorone diisocyanate and/or polyisocyanates derived from these diisocyanates and containing isocyanurate or biuret groups.

**7.** The coating material as claimed in any one of claims 1 to 6, wherein component (A) has an OH number of from 40 to 240, preferably from 60 to 150 mgKOH/g and/or wherein components (A) and (B) are used in amounts such that the ratio of equivalents of the hydroxyl groups of component (A) to the isocyanate groups of component (B) is between 1.6:1 and 0.7:1, preferably between 1.3:1 and 0.9:1.

**8.** A process for preparing coating materials as claimed in claim 1, wherein blocking of the di-and/or polyisocyanates B) with dialkyl malonates is carried out in the following stages:

1.) reacting at least some of the isocyanate groups of the di-and/or polyisocyanate with dimethyl malonate and/or diethyl malonate,

2.) if desired, reacting the reaction product obtained in stage 1) with one or more hydroxyl-containing compounds, and

3.) reacting the reaction product obtained with an aliphatic and/or cycloaliphatic and/or araliphatic secondary alcohol having at least 3 carbon atoms or with a mixture of such alcohols.

**9.** A process for preparing coating materials, especially basecoats and/or topcoats, in which a hydroxyl-component and a crosslinker component are mixed and, if desired, are dispersed, wherein a coating material as claimed in any one of claims 1 to 7 is prepared.

**10.** The process as claimed in claim 9, wherein the crosslinker component (B) has been prepared using the process according to claim 9.

**11.** The use of a coating material as claimed in any one of claims 1 to 7 for a multicoat paint system comprising pigmented basecoat and nonaqueous transparent topcoat, which is applied to a polymer film of the basecoat and these baked together with the basecoat film.

## Revendications

**1.** Peintures contenant

A) un polymère contenant des groupes hydroxy ou un mélange de polymères contenant des groupes hydroxy, et

B) un ou plusieurs di- et/ou polyisocyanates bloqués, dont les groupes isocyanate sont au moins en partie bloqués par des esters dialkyliques d'acide malonique,

**caractérisées en ce que**, pour le coiffage des groupes isocyanate du composant (B), on utilise un mélange d'esters dialkyliques d'acide malonique composé de

b1) 30 à 85 % en poids d'un ou plusieurs esters dialkyliques d'acide malonique de formule générale (I)

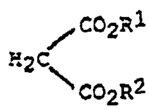

(I)

et/ou d'un ou plusieurs esters dialkyliques d'acide malonique de formule générale (II)

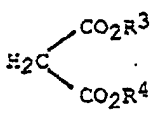

(II),

formules dans lesquelles $R^1$, $R^2$ et $R^3$ représentent chacun des radicaux alkyle secondaires aliphatiques et/ou cycloaliphatiques et/ou araliphatiques, identiques ou différents, ayant au moins 3 atomes de carbone, et $R^4$ représente un radical hydrocarboné aliphatique, cycloaliphatique ou araliphatique, et

b2) 70 à 15 % en poids d'un ou plusieurs esters dialkyliques d'acide malonique différents du composant (b1),

la somme des parties en poids des composants (b1) et (b2) étant de 100 % en poids.

**2.** Peintures selon la revendication 1, **caractérisées en ce que** 50 à 70 % en poids de l'ester dialkylique d'acide malonique utilisé pour le coiffage des groupes isocyanate du composant (B) consistent en un ou plusieurs esters dialkyliques de l'acide malonique de formule (I) et/ou un ou plusieurs esters dialkyliques de l'acide malonique de formule (II).

**3.** Peinture selon la revendication 1 ou 2, **caractérisée en ce que** $R^1$ et/ou $R^2$ et/ou $R^3$ sont choisis dans le groupe constitué par le 2-propanol, des 2-butanols, des 2-pentanols, des 3-pentanols, des 2-hexanols, des 3-hexanols, des nonanols secondaires, des décanols secondaires et des alcools tricyliques secondaires.

**4.** Peinture selon l'une quelconque des revendications 1 à 3, **caractérisée en ce qu'**au moins 50 %, de préférence au moins 90 % des groupes isocyanate du di- et/ou polyisocyanate ont été mis en réaction avec les malonates de dialkyle (b1) et (b2), et les groupes isocyanate restants du di- et/ou polyisocyanate ont été mis en réaction avec un ou plusieurs composés contenant des groupes hydroxy.

**5.** Peinture selon l'une quelconque des revendications 1 à 4, **caractérisée en ce que** les groupes isocyanate bloqués qui sont contenus dans le composant (B) sont liés à des radicaux aliphatiques ou cycloaliphatiques.

**6.** Peinture selon l'une quelconque des revendications 1 à 5, **caractérisée en ce qu'**on utilise en tant que composant (B) des isocyanates bloqués à base d'hexaméthylène-diisocyanate et/ou d'isophorone-diisocyanate et/ou de polyisocyanates contenant des groupes isocyanurate ou biuret, dérivés de ces diisocyanates.

**7.** Peinture selon l'une quelconque des revendications 1 à 6, **caractérisée en ce que** le composant (A) présente un indice de groupes OH de 40 à 240, de préférence de 60 à 150 mg de KOH/g, et/ou **en ce que** les composants

(A) et (B) sont utilisés en quantités telles que le rapport d'équivalents des groupes hydroxy du composant (A) aux groupes isocyanate du composant (B) est compris entre 1,6:1 et 0,7:1, de préférence entre 1,3:1 et 0,9:1.

**8.** Procédé pour la préparation de peintures selon la revendication 1, **caractérisé en ce que** le blocage des di- et/ou polyisocyanates (B) est effectué avec des esters dialkyliques d'acide malonique dans les étapes suivantes :

(1) on fait réagir les groupes isocyanate d'un di-et/ou polyisocyanate au moins en partie avec du malonate de diméthyle et/ou du malonate de diéthyle,
(2) éventuellement on fait réagir le produit de réaction obtenu dans l'étape (1) avec un ou plusieurs composés contenant des groupes hydroxy, et
(3) on fait réagir le produit de réaction avec un alcool secondaire aliphatique et/ou cycloaliphatique et/ou araliphatique ayant au moins 3 atomes de carbone, ou un mélange de tels alcools.

**9.** Procédé pour la préparation de peintures, en particulier de peintures de base et/ou de finition, dans lequel on mélange et éventuellement disperse un composant contenant des groupes hydroxy et un composant de réticulation, **caractérisé en ce que** les peintures sont préparées selon l'une quelconque des revendications 1 à 7.

**10.** Procédé selon la revendication 10, **caractérisé en ce que** le composant de réticulation (B) a été préparé avec utilisation du procédé selon la revendication 9.

**11.** Utilisation d'une peinture selon l'une quelconque des revendications 1 à 7, pour un revêtement de peinture multicouche à couche de base pigmentée et vernis transparent de finition non aqueux, qui est appliqué sur un feuil polymère de la peinture de base et est séché au four conjointement avec la couche de peinture de base.